# EUROPÄISCHE PATENTSCHRIFT

(11) **EP 4 276 146 B1**
(45) Veröffentlichungstag und Bekanntmachung des Hinweises auf die Patenterteilung: **29.01.2025**
(21) Anmeldenummer: 23172436.0
(22) Anmeldetag: 09.05.2023
(51) Int. Cl.: C08L 7/00, B60C 1/00, B60C 9/14, C08K 3/04, C08K 3/06, C08K 3/36, C08K 5/44

(54) **NUTZFAHRZEUGREIFEN**
COMMERCIAL VEHICLE TYRE
PNEU DE VÉHICULE UTILITAIRE

(30) Priorität: 13.05.2022 DE 102022204703
(43) Veröffentlichungstag der Anmeldung: 15.11.2023
(73) Patentinhaber: Continental Reifen Deutschland GmbH, 30175 Hannover (DE)
(72) Erfinder: Jeromin, Dieter, 30165 Hannover (DE); Kleffmann, Jens, 30165 Hannover (DE)
(74) Vertreter: Continental Corporation

(56) Entgegenhaltungen:
- EP-A1- 0 536 615
- EP-A1- 1 632 335
- EP-A1- 2 853 558
- WO-A1-2009/147006
- WO-A1-2018/187250
- DE-A1- 102009 003 517
- DE-A1- 102016 225 584

## Beschreibung

Die Erfindung betrifft einen Nutzfahrzeugreifen in radialer Bauart mit einem Laufstreifen, einem mehrere Gürtellagen aufweisenden Gürtelverband, einer entlang der Reifeninnenseite verlaufenden luftdichten Innenschicht, einer zumindest einlagigen Karkasseinlage mit Stahlkorden als Festigkeitsträger und einer zwischen der Karkasseinlage und der Innenschicht befindlichen Squeegee-Lage, welche auf einer Kautschukmischung basiert, die als Füllstoffe Ruß und Kieselsäure in einem Anteil von 20 phr bis < 43 phr sowie ein Schwefel-Beschleuniger-Vernetzungssystem mit zumindest einem Beschleuniger aus der Gruppe der Benzothiazolsulfenamid -Beschleuniger in einem Anteil von 1 phr bis 3 phr enthält.

Derartige Nutzfahrzeugreifen sind beispielsweise aus der EP 3 611 036 A1 bekannt. Diese Nutzfahrzeugreifen sind insbesondere Reifen für Lastkraftwagen oder Busse, enthalten Squeegee-Lagen, die auf einer Kautschukmischung basieren, deren Füllstoffanteil von 20 phr bis kleiner 43 phr beträgt, und weisen einen um 1,5 % bis 2,5 % geringeren Rollwiderstand auf als Nutzfahrzeugreifen, deren Squeegee-Lage auf einer Kautschukmischung mit einem Füllstoffanteil von 50 phr bis 55 phr basiert.

Squeegee-Lagen in Nutzfahrzeugreifen haben insbesondere die Aufgabe, bei Fertigungsschwankungen das Eindringen der Stahlkorde beim Aufbauen und Vulkanisieren des Reifens in die Innenschicht zu verhindern, um die Reifenhaltbarkeit nicht zu beeinträchtigen, erhöhen jedoch üblicherweise durch das zusätzliche Gummimaterial im Reifen den Rollwiderstand. Die aus dem Stand der Technik gemäß der EP 3 611 036 A1 bekannte Squeegee-Lage vermeidet zwar eine unerwünschte Erhöhung des Rollwiderstandes des Reifens, es können jedoch vereinzelt Stahlkorde der Karkasseinlage bei der Vulkanisation in den Squeegee eindringen, wenn durch Fertigungsschwankungen, etwa Dickenschwankungen des Laufstreifens oder Schwankungen der Stahlkordlängen von Kern zu Kern, eine ungleichmäßige Ausspannung der Karkasseinlage vorliegt. Als Folge davon können diese Stahlkorde die Squeegee-Lage durchdringen und in die Innenschicht eindringen, sodass Haltbarkeitsprobleme des Nutzfahrzeugreifens auftreten.

Der Erfindung liegt somit die Aufgabe zugrunde, bei einem Nutzfahrzeugreifen der eingangs genannten Art die Squeegee-Lage derart auszuführen, dass unter Beibehaltung des verringerten Rollwiderstandes ein Durchdringen der Squeegee-Lage durch Stahlkorde aus der Karkasseinlage zuverlässig vermieden wird.

Gelöst wird die gestellte Aufgabe erfindungsgemäß dadurch, dass der Anteil an Schwefel im Schwefel-Beschleuniger-Vernetzungssystem der Kautschukmischung 4 phr bis 7 phr beträgt.

Es hat sich überraschenderweise herausgestellt, dass Squeegee-Lagen, die auf einer derartigen Kautschukmischung basieren, eine besonders gute Haftung zu etwaigen aus der Karkasseinlage während der Vulkanisation eindringenden Stahlkorden gewährleisten, sodass keine Stahlkorde mehr die Squeegee-Lage durchdringen. Die auf den Füllstoffanteil zurückzuführende gute Rollwiderstandsperformance bleibt erhalten. Die Squeegee-Lage hat somit auch die Funktion einer Stahlkord-Haftmischung, die gemäß der Erfindung gut ausbalanciert ist. Erreicht wird dies für die erwähnten Füllstoff-Mengen zuverlässig durch das vorgesehene Schwefel-Beschleuniger-Vernetzungssystem mit einem Schwefelanteil von 4 phr bis 7 phr und mit zumindest einem Beschleuniger aus der Gruppe der Benzothiazolsulfenamid -Beschleuniger in einem Anteil von 1 phr bis 3 phr. Derartige "langsame" Beschleuniger ergeben zudem Vulkanisate mit einer hohen Vernetzungsdichte, hoher Festigkeit und einer hohen Elastizität.

Bei einer bevorzugten Ausführung basiert die Squeegee-Lage auf einer Kautschukmischung, deren Anteil an Schwefel im Schwefel-Beschleuniger-Vernetzungssystem 4 phr bis 6 phr, insbesondere 4 phr, beträgt. Squeegee-Lagen aus einer derartigen Kautschukmischung sind hinsichtlich ihrer Funktion als Stahlkord-Haftmischung und dem Beibehalten einer guten Rollwiderstandsperformance durch die erwähnten Anteile an Füllstoffen besonders gut ausbalanciert.

Besonders vorteilhaft ist es ferner, wenn die Squeegee-Lage auf einer Kautschukmischung basiert, die im Schwefel-Beschleuniger-Vernetzungssystem als den oder als einen der Beschleuniger DCBS (N-Dicyclohexyl-2-Benzothiazolsulfenamid) enthält. DCBS hat sich als besonders vorteilhaft für die vorteilhafte Vernetzungsreaktion bei Schwefelanteilen von 4 phr bis 7 phr erwiesen. Grundsätzlich kommen auch andere Beschleuniger aus der Gruppe der Benzothiazolsulfenamid-Beschleuniger in Frage, die in beliebigen Kombinationen oder einzeln in der Kautschukmischung für die Squeegee-Lage eingesetzt werden können. Besonders geeignet aus dieser Beschleunigergruppe sind CBS (N-Cyclohexylbenzothiazol-2-sulfenamid), TBBS (N-tert-Butylbenzothiazol-2-sulfenamid) und MBS (2-Morpholindithio-1,3-benzothiazol).

Besonders vorteilhaft ist es weiters, wenn die Kautschukmischung für die Squeegee-Lage Silan in einem Anteil von 0,5 phr bis 2 phr enthält. Besonders bevorzugt ist der Einsatz von bifunktionellem Organosilan, um bestimmte vorteilhafte physikalische Eigenschaften der Squeegee-Lage zu gewährleisten, wie eine höhere Zugfestigkeit, einen höheren Spannungswert 300 % und eine geringe Wärmeentwicklung. Derartige Silantypen begünstigen auch einen niedrigen Rollwiderstand des Reifens.

Bevorzugt basiert die Squeegee-Lage ferner auf einer Kautschukmischung, deren Anteil an Kieselsäure im Füllstoff 30 % bis 45 % beträgt. Die Kautschukmischung enthält daher auch einen relativ hohen Anteil an Kieselsäure, welche für die mechanischen Eigenschaften des Gummimaterials der Squeegee-Lage, wie die Reißfestigkeit und das Spannungs-Dehnungsverhalten, von Vorteil ist.

Gemäß einer bevorzugten Ausführung basiert die Squeegee-Lage auf einer Kautschukmischung, welche im Polymeranteil 10 phr bis 30 phr BR (Butadienkautschuk) oder 10 phr bis 40 phr funktionalisierten BR (Butadienkautschuk) enthält, um derart die Elastizität und die Kälteflexibilität der Squeegee-Lage vorteilhaft zu beeinflussen. Der sonstige Polymeranteil wird insbesondere von Naturkautschuk eingenommen.

Es hat sich herausgestellt, dass die Squeegee-Lage zusätzlich einen vergleichsweise hohen Anteil an Regenerat enthalten kann, ohne dass ihre erwünschten Eigenschaften, insbesondere die Hafteigenschaften, nachteilig beeinflusst werden. In die Kautschukmischung der Squeegee-Lage wird Regenerat insbesondere in einem Anteil von bis zu 35 phr, vorzugsweise bis zu 30 phr, eingemischt.

Weitere Merkmale, Vorteile und Einzelheiten der Erfindung werden nun anhand der Zeichnung, die schematisch ein Ausführungsbeispiel darstellt, näher beschrieben. Die einzige Figur,

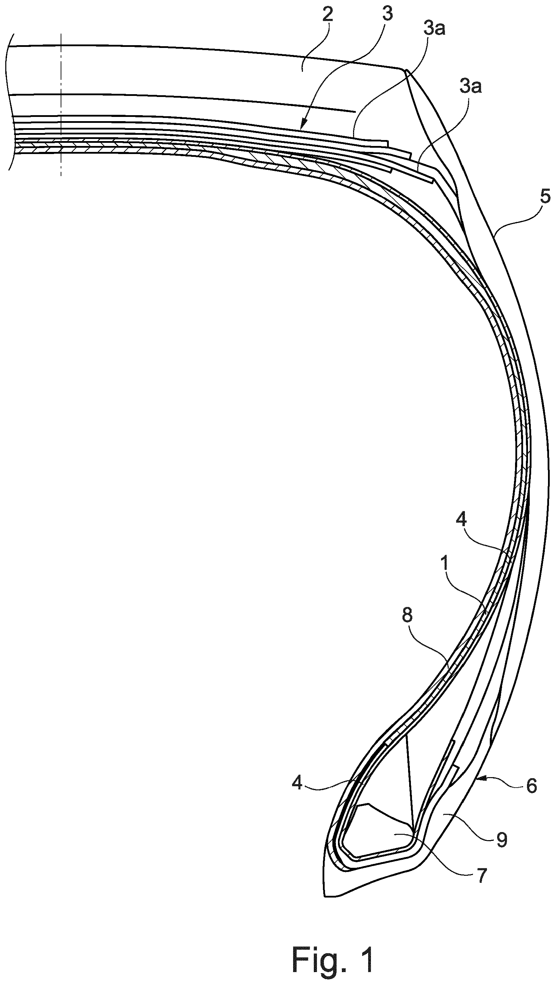

Fig. 1, zeigt einen Teilquerschnitt eines Fahrzeugluftreifens.

Gemäß der Erfindung ausgeführte Fahrzeugluftreifen sind Reifen in Radialbauart für Nutzfahrzeuge, wie Lastkraftwagen oder Busse, die eine Squeegee-Lage 1 enthalten. Die Bezeichnung "Squeegee" ist eine übliche und dem Reifenfachmann bekannte Bezeichnung für eine Gummilage zwischen der Innenschicht und der Karkasseinlage.

Der in Fig. 1 gezeigte Teilquerschnitt eines Nutzfahrzeugreifens entspricht weitgehend dem im bereits erwähnten Stand der Technik gemäß der EP 3 611 036 A1 dargestellten und beschriebenen Teilquerschnitt.

Fig. 1 zeigt einen Nutzfahrzeugreifen mit einem Laufstreifen 2, der mit einer nicht dargestellten Profilierung versehen ist, einem Gürtelverband 3 mit vier Gürtellagen 3a, einer ein- oder mehrlagigen Karkasseinlage 4, Seitenwänden 5, Wulstbereichen 6 mit je einem Wulstkern 7 und einem Hornprofil 9 und weiteren, nicht bezeichneten Wulstverstärkungslagen. Der Nutzfahrzeugreifen weist ferner eine Innenschicht 8 auf, welche die Innenseite des Nutzfahrzeugreifens bedeckt und, wie üblich, aus einem luftdichten oder weitgehend luftdichten Gummimaterial besteht und über ihren Verlauf entlang der Reifeninnenseite eine weitgehend konstante oder eine stellenweise variierende Stärke aufweist.

Jede Lage der Karkasseinlage 4 besteht aus in eine Karkassgummierung eingebetteten Stahlkorden, die im Wesentlichen parallel zueinander und in den Seitenwänden 5 in radialer Richtung bzw. im Wesentlichen in radialer Richtung verlaufen. Zwischen der Innenschicht 8 und der Innenseite der Karkasseinlage 4 befindet sich die bereits erwähnte Squeegee-Lage 1, die durchgehend von Wulstbereich 6 zu Wulstbereich 6 verläuft und in den Wulstbereichen 6 oder nahe der Wulstbereiche 6 endet, beispielsweise einige Millimeter bis wenige Zentimeter radial außerhalb der hier befindlichen Enden der Innenschicht 8.

Die Squeegee-Lage 1 basiert auf einer Squeegee-Mischung, die einen Füllstoffanteil von 20 phr bis < 43 phr (parts per hundred rubber) insbesondere < 40 phr und bevorzugt < 35 phr enthält. Als Füllstoffe enthält die Squeegee-Lage 1 in Kombination Ruß mit Kieselsäure, wobei der Anteil an Kieselsäure 30 % bis 45 % und Anteil an Ruß im Füllstoff 55 % bis 70 % beträgt. Darüber hinaus enthält die Kautschukmischung für die Squeegee-Lage 1 ein Schwefel-Beschleuniger-Vernetzungssystem mit einem vergleichsweise hohen Anteil an elementaren Schwefel von 4 phr bis 7 phr, insbesondere bis 6 phr, und besonders bevorzugt von 4 phr. Der für die Vernetzungsreaktion verwendete Beschleuniger ist zumindest ein langsamer Beschleuniger aus der Gruppe der Benzothiazolsulfenamid-Beschleuniger, vorzugsweise DCBS (N-Dicyclohexyl-2-Benzothiazolsulfenamid) in einem Anteil von 1 phr bis 3 phr.

Die nachstehende Tabelle 1 enthält Mischungsbeispiele A bis G für Squeegee-Kautschukmischungen, wobei das Mischungsbeispiel A eine Referenz-Squeegee-Mischung wiedergibt und die Mischungsbeispiele B bis G Squeegee-Mischungen gemäß der Erfindung wiedergeben. Die Anteile der Mischungsbestandteile sind in phr (parts per hundred rubber) angegeben.

**Tabelle 1**

| | **A** | **B** | **C** | **D** | **E** | **F** | **G** |
|---|---|---|---|---|---|---|---|
| *Naturkautschuk* | 100 | 100 | 100 | 100 | 100 | 100 | 80 |
| *BR* | | | | | | | 20 |
| *Regenerat* | | | | 25 | | | |
| *Russ N339* | 23 | 23 | 23 | 23 | 23 | 23 | 23 |
| *Kieselsäure* ** | 14 | 14 | 14 | 14 | 14 | 14 | 14 |
| *Prozesshilfsmittel* | 5 | 5 | 5 | 5 | 5 | 5 | 5 |
| *Antioxidantien* | 2 | 2 | 2 | 2 | 2 | 2 | 2 |
| *Cobaltstearat* | 1,7 | 1,7 | 1,7 | 1,7 | 1,7 | 1,7 | 1,7 |
| *HMMM ** | 1,6 | 1,6 | 1,6 | 1,6 | 1,6 | 1,6 | 1,6 |
| *ZnO* | 6 | 6 | 6 | 6 | 6 | 6 | 6 |
| *Silan* *** | 1 | 1 | 1 | 1 | | | 1 |
| *DCBS* | 3,2 | 2 | 1,5 | 2 | 2 | 1,5 | 2 |
| *Schwefel* | 3 | 6 | 4 | 6 | 6 | 4 | 6 |

| | | | | | | | |
|---|---|---|---|---|---|---|---|
| * Haftvermittler Hexa(methoxymethyl)melamin ** Ultrasil VN 3 ***Bifunktionelles Organosilan (TESPD) | | | | | | | |

Die Beispiele A bis F enthalten ausschließlich Naturkautschuk als Polymer, das Beispiel E Naturkautschuk in Kombination mit Butadienkautschuk. Im Mischungsbeispiel D ist zusätzlich Regenerat in einem Anteil von 25 phr enthalten, wobei das Regenerat insbesondere von abgetragenen Laufstreifen und/oder Seitenwänden von LKW-Reifen stammt. Regenerat kann bis zu einer Obergrenze von 35 phr, insbesondere bis zu 30 phr, zugegeben sein, ohne die erwünschten Eigenschaften der Squeegee-Lage 1 merklich zu beeinflussen. Der Anteil an Silan (bifunktionelles Organosilan) beträgt bis zu 2 phr, insbesondere mindesten 0,5 phr.

Der Anteil an Naturkautschuk in den Mischungen B bis G kann 60 phr bis 100 phr betragen, wobei im Polymeranteil neben Naturkautschuk Butadienkautschuk oder Synthesekautschuk enthalten sein kann. Der Begriff "Naturkautschuk" schließt neben dem Kautschuk aus Kautschukbäumen auch Naturkautschuk ein, der nicht aus Bäumen gewonnen wird. Bezüglich Russ und Kieselsäure kommen die in Kautschukmischungen für Reifenbauteile üblichen Typen in Frage.

Tabelle 2 enthält mit Vulkanisaten aus den Mischungen A bis G gemäß den angegebenen Normen ermittelte Messwerte hinsichtlich der Zugfestigkeit, der Reißdehnung, des Spannungswertes 300 %, der Rückprallelastizitäten bei Raumtemperatur (25° C) und bei 70° C sowie der Auszugskraft. Die Auszugskraft und die Cordbedeckung wurden gemäß ASTM D2229-10 bestimmt.

Die in der Tabelle 2 dargestellten Messwerte wurden bezüglich der Vulkanisate aus der Referenzmischung A bei jeder getesteten Eigenschaft auf 100% Performance normiert.

**Tabelle 2**

| | **A** | **B** | **C** | **D** | **E** | **F** | **G** |
|---|---|---|---|---|---|---|---|
| *Zugfestigkeit gemäß DIN 53504 [MPa]* | 100 | 91 | 95 | 82 | 86 | 86 | 91 |
| *Reißdehnung gemäß DIN 53504 [%]* | 100 | 77 | 94 | 76 | 79 | 101 | 92 |
| *Spannungswert 300 % gemäß DIN 53504 [MPa]* | 100 | 146 | 110 | 134 | 122 | 100 | 110 |
| *Härte gemäß DIN 53519 [ShoreA]* | 100 | 115 | 104 | 113 | 113 | 104 | 106 |
| *Rückprallelastizität bei Raumtemperatur(25°C) gemäß DIN 53512 [%]* | 100 | 105 | 102 | 104 | 105 | 100 | 105 |
| *Rückprallelastizität bei 70°* C *gemäß DIN 53512 [%]* | 100 | 103 | 101 | 99 | 101 | 100 | 100 |
| *Auszugskraft gemäß ASTM D2229-10 [N]* | 100 | 125 | 126 | 109 | 117 | 117 | 124 |
| *Cord-Bedeckung bei Raumtemperatur (25°C) gemäß ASTM D2229-10 [%],* | 100 | 116 | 112 | 118 | 116 | 114 | 114 |

Die Messergebnisse aus dem Cordauszugstest und die festgestellten Cord-Bedeckungen (> 110 %) belegen gegenüber den Vulkanisaten aus der Referenzmischung A mit einem Schwefel-Anteil von 3 phr die erzielte gute Haftung.

### Bezugszeichenliste

- 1: Squeegee-Lage
- 2: Laufstreifen
- 3: Gürtelverband
- 3a: Gürtellage
- 4: Karkasseinlage
- 5: Seitenwand
- 6: Wulstbereich
- 7: Wulstkern
- 8: Innenschicht
- 9: Hornprofil

## Patentansprüche

1. Nutzfahrzeugreifen in radialer Bauart mit einem Laufstreifen (2), einem mehrere Gürtellagen (3a) aufweisenden Gürtelverband (3), einer entlang der Reifeninnenseite verlaufenden luftdichten Innenschicht (8), einer zumindest einlagigen Karkasseinlage (4) mit Stahlkorden als Festigkeitsträger und einer zwischen der Karkasseinlage (4) und der Innenschicht (8) befindlichen Squeegee-Lage (1), welche auf einer Kautschukmischung basiert, die als Füllstoffe Ruß und Kieselsäure in einem Anteil von 20 phr bis < 43 phr sowie ein Schwefel-Beschleuniger-Vernetzungssystem mit zumindest einem Beschleuniger aus der Gruppe der Benzothiazolsulfenamid -Beschleuniger in einem Anteil von 1 phr bis 3 phr enthält,
**dadurch gekennzeichnet,**
**dass** der Anteil an Schwefel im Schwefel-Beschleuniger-Vernetzungssystem der Kautschukmischung 4 phr bis 7 phr beträgt.

2. Nutzfahrzeugreifen nach Anspruch 1, **dadurch gekennzeichnet, dass** die Squeegee-Lage (1) auf einer Kautschukmischung basiert, deren Anteil an Schwefel im Schwefel-Beschleuniger-Vernetzungssystem 4 phr bis 6 phr, insbesondere 4 phr, beträgt.

3. Nutzfahrzeugreifen nach Anspruch 1 oder 2, **dadurch gekennzeichnet, dass** die Squeegee-Lage (1) auf einer Kautschukmischung basiert, die im Schwefel-Beschleuniger-Vernetzungssystem als den oder einen der Beschleuniger DCBS (N-Dicyclohexyl-2-Benzothiazolsulfenamid) enhält.

4. Nutzfahrzeugreifen nach einem oder mehreren der Ansprüche 1 bis 3, **dadurch gekennzeichnet, dass** die Squeegee-Lage (1) auf einer Kautschukmischung basiert, die Silan (bifunktionelles Organosilan) in einem Anteil von 0,5 phr bis zu 2 phr enthält.

5. Nutzfahrzeugreifen nach einem oder mehreren der Ansprüche 1 bis 4, **dadurch gekennzeichnet, dass** die Squeegee-Lage (1) auf einer Kautschukmischung basiert, deren Anteil an Ruß im Füllstoff 55 % bis 70 % beträgt.

6. Nutzfahrzeugreifen nach einem oder mehreren der Ansprüche 1 bis 5, **dadurch gekennzeichnet, dass** die Squeegee-Lage (1) auf einer Kautschukmischung basiert, welche im Polymeranteil 10 phr bis 30 phr BR (Butadienkautschuk) enthält.

7. Nutzfahrzeugreifen nach einem oder mehreren der Ansprüche 1 bis 5, **dadurch gekennzeichnet, dass** die Squeegee-Lage (1) auf einer Kautschukmischung basiert, welche im Polymeranteil 10 phr bis 40 phr funktionalisierten BR (Butadienkautschuk) enthält.

8. Nutzfahrzeugreifen nach einem oder mehreren der Ansprüche 1 bis 7, **dadurch gekennzeichnet, dass** die Squeegee-Lage (1) auf einer Kautschukmischung basiert, welche zusätzlich Regenerat in einem Anteil von bis zu 35 phr, insbesondere bis zu 30 phr enthält.

## Claims

1. Commercial vehicle tyre of radial construction having a tread (2), a belt bandage (3) comprising a plurality of belt plies (3a), an airtight inner layer (8) running along the inside of the tyre, an at least single-ply carcass insert (4) comprising steel cords as strength members and a squeegee ply (1) arranged between the carcass insert (4) and the inner layer (8) which is based on a rubber mixture containing the fillers carbon black and silica in a proportion of 20 phr to < 43 phr and a sulfur accelerator crosslinking system comprising at least one accelerator from the group of benzothiazolesulfenamide accelerators in a proportion of 1 phr to 3 phr,
**characterized in that**
the proportion of sulfur in the sulfur accelerator crosslinking system of the rubber mixture is 4 phr to 7 phr.

2. Commercial vehicle tyre according to Claim 1, **characterized in that** the squeegee ply (1) is based on a rubber mixture whose proportion of sulfur in the sulfur accelerator crosslinking system is 4 phr to 6 phr, in particular 4 phr.

3. Commercial vehicle tyre according to Claim 1 or 2, **characterized in that** the squeegee ply (1) is based on a rubber mixture which contains in the sulfur accelerator crosslinking system DCBS (N-dicyclohexyl-2-benzothiazolesulfenamide) as the accelerator or one of the accelerators .

4. Commercial vehicle tyre according to one or more of Claims 1 to 3, **characterized in that** the squeegee ply (1) is based on a rubber mixture containing silane (bifunctional organosilane) in a proportion of 0.5 phr to 2 phr.

5. Commercial vehicle tyre according to one or more of Claims 1 to 4, **characterized in that** the squeegee ply (1) is based on a rubber mixture whose proportion of carbon black in the filler is 55% to 70%.

6. Commercial vehicle tyre according to one or more of Claims 1 to 5, **characterized in that** the squeegee ply (1) is based on a rubber mixture containing 10 phr to 30 phr of BR (butadiene rubber) in the polymer content.

7. Commercial vehicle tyre according to one or more of Claims 1 to 5, **characterized in that** the squeegee ply (1) is based on a rubber mixture which contains 10 phr to 40 phr of functionalized BR (butadiene rubber) in the polymer content.

8. Commercial vehicle tyre according to one or more of Claims 1 to 7, **characterized in that** the squeegee ply (1) is based on a rubber mixture which additionally contains regenerate in a proportion of up to 35 phr, in particular up to 30 phr.

## Revendications

1. Pneu de véhicule utilitaire de construction radiale, présentant une bande de roulement (2), un ensemble ceinture (3) présentant plusieurs couches de ceinture (3a), une couche interne (8) étanche à l'air s'étendant le long de la face interne du pneu, une nappe carcasse (4) au moins monocouche présentant des câbles d'acier en tant que support de résistance et une couche de gomme sur pli (1) située entre la nappe carcasse (4) et la couche interne (8), laquelle couche de gomme sur pli est basée sur un mélange de caoutchouc qui contient, en tant que charges, de la suie et de la silice en une proportion de 20 pcc à < 43 pcc ainsi qu'un système de réticulation de type soufre-accélérateur présentant au moins un accélérateur du groupe des accélérateurs de type benzothiazolesulfénamide en une proportion de 1 pcc à 3 pcc,
**caractérisé en ce que**
la proportion de soufre dans le système de réticulation de type soufre-accélérateur du mélange de caoutchouc représente 4 pcc à 7 pcc.

2. Pneu de véhicule utilitaire selon la revendication 1, **caractérisé en ce que** la couche de gomme sur pli (1) est basée sur un mélange de caoutchouc dont la proportion de soufre dans le système de réticulation de type soufre-accélérateur représente 4 à 6 pcc, en particulier 4 pcc.

3. Pneu de véhicule utilisateur selon la revendication 1 ou 2, **caractérisé en ce que** la couche de gomme sur pli (1) est basée sur un mélange de caoutchouc qui contient, dans le système de réticulation de type soufre-accélérateur, en tant qu'accélérateur ou en tant qu'un des accélérateurs, du DCBS (N-dicyclohexyl-2-benzothiazolesulfénamide).

4. Pneu de véhicule utilitaire selon l'une ou plusieurs des revendications 1 à 3, **caractérisé en ce que** la couche de gomme sur pli (1) est basée sur un mélange de caoutchouc qui contient du silane (organosilane bifonctionnel) en une proportion de 0,5 pcc jusqu'à 2 pcc.

5. Pneu de véhicule utilitaire selon l'une ou plusieurs des revendications 1 à 4, **caractérisé en ce que** la couche de gomme sur pli (1) est basée sur un mélange de caoutchouc dont la proportion de suie dans la charge est de 55% à 70%.

6. Pneu de véhicule utilitaire selon l'une ou plusieurs des revendications 1 à 5, **caractérisé en ce que** la couche de gomme sur pli (1) est basée sur un mélange de caoutchouc qui contient, dans la proportion polymère, 10 pcc à 30 pcc de BR (caoutchouc de butadiène).

7. Pneu de véhicule utilitaire selon l'une ou plusieurs des revendications 1 à 5, **caractérisé en ce que** la couche de gomme sur pli (1) est basée sur un mélange de caoutchouc qui contient, dans la proportion polymère, 10 pcc à 40 pcc de BR (caoutchouc de butadiène) fonctionnalisé.

8. Pneu de véhicule utilitaire selon l'une ou plusieurs des revendications 1 à 7, **caractérisé en ce que** la couche de gomme sur pli (1) est basée sur un mélange de caoutchouc qui contient en plus du caoutchouc régénéré en une proportion de jusqu'à 35 pcc, en particulier jusqu'à 30 pcc.
